Europäisches Patentamt

European Patent Office

Office européen des brevets

(19)

(11) Publication number: **0 664 209 A1**

# EUROPEAN PATENT APPLICATION

(12)

(21) Application number: **94300500.9**

(22) Date of filing: **24.01.94**

(51) Int. Cl.6: **B32B 15/08**, B32B 31/00

(43) Date of publication of application:
**26.07.95 Bulletin 95/30**

(84) Designated Contracting States:
**DE FR GB IT NL**

(71) Applicant: **TOYO KOHAN Co., Ltd**
**4-3 Kasumigaseki 1-chome,**
**Chiyoda-ku**
**Tokyo 100 (JP)**

(72) Inventor: **Tanaka, Atsuo**
**5-2, Enomiyacho**
**Tokuyama-shi,**
**Yamaguchi-ken (JP)**
Inventor: **Okamura, Takaaki**
**4348, Ohaza-yanai**
**Yanai-shi,**
**Yamaguchi-ken (JP)**

(74) Representative: **Skailes, Humphrey John**
**Frank B. Dehn & Co.**
**Imperial House**
**15-19 Kingsway**
**London WC2B 6UZ (GB)**

(54) **Metal sheet laminated with resin films.**

(57) A metal sheet is described having a layer of hydrated chromium oxide or a double layer composed of an upper layer of hydrated chromium oxide and a lower layer of metallic chromium. One side of the sheet is laminated with a polyester resin film having a minimum half crystallization time of less than 100 seconds and a glass transition temperature of 40 to 70 °C and the other side is laminated with an adhesive polyolefin resin. The sheet is used for retortable can stock or screw caps having excellent resistance to milky change during retort treatment after packing foods or beverages.

EP 0 664 209 A1

Rank Xerox (UK) Business Services
(3.10/3.09/3.3.4)

The present invention relates to a metal sheet laminated with a different resin film on each side and its production.

BACKGROUND OF THE INVENTION

Metal sheet stock such as electrotinplate, tin free steel (TFS or ECCS) and aluminium alloy sheet are widely used for food or beverage packing after applying one or more coats of organic lacquer. However, the use of the lacquer coating has associated drawbacks including increased energy costs due to extended curing times, and the discharge of solvent during the curing process, which must be disposed of, for example, by incineration to prevent environmental pollution.

To avoid such problems, a metal sheet laminated with a thermoplastic resin film on both sides has recently been described, but this is not always suitable for all purposes. In many cases, it is desirable to use a metal sheet laminated with different resin film on each side, thereby making use of the different properties of the resin films.

For example, US 4957920 and in US 4980210 disclose a metal sheet one side of which is laminated with a polyolefin based resin film and the other side with a thermoplastic resin film, such as a polyester resin film composed of an upper layer of biaxially oriented polyethylene terephthalate and a lower layer of an amorphous copolyester resin composed of 80 mole % of ethylene terephthalate and 20 mole % of ethylene isophthalate or composed of terephthalic acid and two alcohols such as ethylene glycol and cyclohexane-dimethanol. This material can be used to produce can ends, and can bodies for drawn and redrawn cans and also drawn and ironed cans. However, in some cases the side of metal sheet laminated with the polyester resin film is on the outside of can end or can body. The food or beverage is then packed into the cans and sterilized in hot steam and hot water at 100 to 120°C in a retort. This causes the formation of numerous milky spots on the outside, which detract from the value of the packaging. It seems that this milkiness is due to the difference in the recrystallization speed of the amorphous non-oriented polyester resin layer in the part contacting hot water from that contacting hot steam, and it mostly appears in cases where a polyester resin such as a copolyester of ethylene terephthalate and ethylene isophthalate (the recrystallization speed of the amorphous non-oriented resin layer of which is slow) is used as the outside layer. In cases where the surface of the polyester resin film laminated metal sheet is uniformly contacted with hot water or hot steam alone, the milky spots are not observed. The appearance of the milky spots can be prevented by heating the laminate to 160 to 220°C for 2 to 20 minutes before forming it into can end or can body, but this melts the polyolefin resin film laminated on the other side of metal sheet and the coating deteriorates. It is also possible to prevent the milkiness by treating the laminate in uniform contact with hot steam or hot water alone or by a retort treatment at high temperature. However, these methods are not practical.

For these reasons the laminates of US 4957920 and US 4980210 can not be used for can stock where the polyester resin film is on the outside.

The milky change of the polyester resin film can be reduced by lamination such that the amorphous non-oriented resin layer forms as little as possible. For example, in the laminate according to US 4614691, only slight milky change is observed on the outside of the can body, because the presence of an amorphous non-oriented polyester resin layer which causes it is substantially reduced as a result of lamination at a temperature below the melting temperature of the polyester resin film. However, the use of a polyester resin film precoated with a specified adhesive is essential in this method. The method is therefore disadvantageous from the standpoint of the material cost and the release of a large volume of solvent during drying and curing the adhesive.

The milkiness of the polyester resin film can also be reduced by using a copolyester resin film having a higher recrystallization speed for the amorphous non-oriented resin layer and inhibiting the formation of the amorphous layer by rapid recrystallization immediately after the lamination. One such polyester resin is a blend of polyethylene terephthalate and polybutylene terephthalate.

Japanese Patent Publication Sho 57-23584 describes a metal structure laminated with a thermoplastic polyester resin produced by esterification of a dicarboxylic acid (of which at least 45 mole % is terephthalic acid) with a diol (of which at least 55 mole % is 1,4-butane diol). The polyester resin has a relative viscosity of 1.2 to 1.8, a tack point of not lower than 130°C, and a degree of crystallinity of up to 30 %. In this reference the metal substrate is laminated with a thermoplastic resin containing above 45 mole % of polybutylene terephthalate, which has an amorphous non-oriented structure. Therefore, if the laminate is formed into a can and then treated in a retort after packing, the appearance of outside of the can may become milky, because the amorphous non-oriented layer in the laminate is non-uniformly recrystallized by the retort treatment.

Additionally, Japanese Patent Publication Sho 60-4058 describes a can end produced from a polyester resin laminated metal sheet, formed by heat bonding a polyester resin to the metal sheet. The polyester is produced by esterification of a dicarboxylic acid with a diol of which at least 45 mole % is 1,4-butane diol, and has an intrinsic viscosity of 0.7 to 2.8.

The can end according to this reference cannot be used for applications in which excellent resistance to milkiness in retort treatment is required, because an amorphous non-oriented structure is formed, as in Japanese Patent Publication Sho 57-23584.

As mentioned above, the milky change cannot be completely eliminated by using a copolyester resin film having a higher recrystallization speed for the amorphous non-oriented resin layer, without a certain level of biaxial orientation which inhibits the formation of large spherulites which is a main factor of the milky change. It is only possible to prevent the milky change completely by using a polyester resin film having a specific biaxial orientation and a recrystallization speed for the amorphous non-oriented resin layer as the outside of can stock.

For the above reasons, the laminates according to these references do not have all of the characteristics required for a can which is to be treated in a retort after packing foods or beverages.

Accordingly, a primary objective of the present invention is to provide a metal sheet of which one side is laminated with a polyester resin film which has improved resistance to becoming milky on the outside of can stock after retort treatment for sterilization of the packed foods or beverages, and also has improved adhesion of the laminated polyester resin film to the metal sheet and formability into can ends, can bodies for three piece cans, drawn and redrawn cans, drawn and stretched formed cans, and screw caps.

It is another objective of this invention to provide an economical method for the continuous production of such resin film laminated metal sheet at high speed.

## SUMMARY OF THE INVENTION

The invention provides a metal sheet having on both sides a single layer of hydrated chromium oxide or a double layer comprising a lower layer of metallic chromium and an upper layer of hydrated chromium oxide and having a different resin film laminated on each side, one side of the sheet being laminated with a polyester resin film (A) which has a minimum half crystallisation time of less than 100 seconds and a glass transition temperature of 40 to 70°C, and the other side being laminated with an adhesive polyolefin film (B) of which the side laminated to the metal sheet is oxidised, or a polyolefin - containing resin film (B) composed of modified polyolefin resin which contains carboxylic acid, ester or anhydride groups.

The invention also provides a method of heat bonding these different resin films to the metal sheet at the same time, followed by quenching.

## DETAILED DESCRIPTION OF THE INVENTION

The side of the metal sheet laminated with a polyester resin film can be used for the outside of can stock such as can ends, can bodies for three piece cans, drawn cans, drawn and redrawn cans, drawn and stretch-formed cans having a high can height and screw caps, all of which are treated with hot steam and hot water in a retort for the sterilization of the packed foods or beverages.

In the present invention, several characteristics of the laminated metal sheet are important and include the following:

(1) the characteristics of the polyester resin film

(2) the characteristics of the polyester resin film after lamination to the metal sheet, especially the characteristics of the polyester resin layer contacting the surface of the metal sheet

(3) the characteristics of the polyolefin resin film

(4) the use of a surface treated metal sheet which preferably has excellent adhesion to the laminated polyester resin film and polyolefin resin film ; and

(5) the selection of laminating conditions with regard to the characteristics of the resin films.

## THE POLYESTER RESIN FILM

The polyester resin film (A) preferably used in the present invention is a biaxially oriented polyester resin film (preferably consisting of about 20 to 60 weight % of polybutylene terephthalate and about 40 to 80 weight % of polyethylene terephthalate) having a glass transition temperature of about 40 to 70°C, and a minimum half crystallization time of less than 100 seconds (e.g. 0.5-100 seconds). In this polyester resin film, a decrease in the amount of polybutylene terephthalate leads to the poor resistance to milky change in retort treatment, because it seems that the amount of amorphous non-oriented polyester resin formed in the production process increases as the crystallization speed of the resin decreases. On the other hand, an increase in the amount of polybutylene terephthalate leads to poor surface appearance. Furthermore, it is industrially difficult to produce a biaxially oriented polyester resin film with a higher amount of polybutylene terephthalate, because the crystallization speed of the extruded resin becomes remarkably fast and biaxial elongation of the extruded resin becomes difficult. It is more preferable to use a polyester resin film consisting of about 40 to 60 weight % of polybutylene terephthalate and about 40 to 60 weight % of polyethylene terephthalate having a minimum half crystallization time of less than 20 seconds, from the standpoint of consistent and high speed production of the laminate.

The minimum half crystallization time of the polyester resin film used is defined as the minimum time for half crystallization of the polyester in the temperature range over which it crystallizes. This property can be determined by using an instrument for the measurement of polymer crystallization speed (for example, MK-701 made by Kotaki Co., Ltd.) and can be calculated by the following Avrami equations:

$$1-X = Exp(-Kt^n)$$
$$1-X = (I_t-I_g)/(I_o-I_g)$$

where

X: the crystallinity of the polyester resin;

K: a constant for crystallization speed of the polyester resin;

n: Avrami index;

t: time (second);

$I_o$: the transparent intensity of depolarized light at the start of the measurement, or more particularly $I_o$ represents a value which can be obtained after the melted polyester resin is dropped into a silicone oil bath for crystallization and then kept 10 seconds;

$I_t$: the transparent intensity of depolarized light after t seconds in the measurement, or more particularly $I_t$ represents the value after 10 + t seconds ; and

$I_g$: the transparent intensity of depolarized light at the end point of the measurement, or $I_g$ represents the value in which I-log t curve shows almost a straight line.

Furthermore, the polyester resin film (A) can be a composite of two polyester resin film layers, for example a lower layer of a polyester resin film (AI) (which is is generally the same as the single film (A) described above and thus is preferably a biaxially oriented polyester resin film consisting of about 20 to 60 weight % of polybutylene terephthalate and about 40 to 80 weight % of polyethylene terephthalate, and has a glass transition temperature of about 40 to 70°C, and a minimum half crystallization time of less than 100 seconds) and an upper layer of a polyester resin film (A2), which is a biaxially oriented polyethylene terephthalate homopolymer or a biaxially oriented copolymer consisting of about 80 to 98 mole % of ethylene terephthalate and 2 to 20 mole % of ethylene isophthalate. It goes without saying that these composite polyester resin films can be applied as the outside coating of a can, but they can also be applied as the inside coating. In the case where a polyester resin film (A) consisting of a mono-layer film of (AI) alone is applied as the inside coating of a can and the polybutylene terephthalate directly contacts the food or beverage packed in the can, it may absorb certain flavor ingredients and the taste or scent of the food or beverage may be affected. In such a case, the use of a composite polyester resin film (consisting of a lower layer which contains polybutylene terephthalate and an upper layer of above-mentioned homopolymer or copolymer) prevents direct contact of polybutylene terephthalate resin with the food or beverage, and can be more preferable and practical as the inside coating.

In addition, in the polyester resin film of the lower layer (AI), a resin in which part of polyethylene terephthalate is replaced by a copolymer consisting of ethylene terephthalate and ethylene isophthalate (or with another polymer) can also be used, provided that the substitution does not cause noticable diminution of the crystallization speed of the resin. A preferred example of such a copolymer consists of about 80 to 98 mole % of ethylene terephthalate and 2 to 20 mole % of ethylene isophthalate.

The above mentioned composite polyester resin film (A) is preferably prepared by co-extrusion prior to application to the metal sheet.

The glass transition temperature of the employed polyester resin film is also an important factor in the present invention. This glass transition temperature can be measured at a heating rate of 10°C/minute, for example, in a differential scanning calorimeter (SS10) made by Seiko Denshi Kogyo Co. In the present invention, it is necessary to use a polyester resin film having a glass transition temperature of about 40 to 70°C for a mono-layer film (A) or the lower layer film (A1) of a double-layered film (A). If a polyester resin film having a glass transition temperature below about 40°C is used, the surfaces of the laminate may stick to each other in the production process. Furthermore, the corrosion resistance of such laminated metal sheet becomes critical when used as the inside covering of a can, because this polyester resin film has poor barrier properties. In the present invention, the upper limit of the glass transition temperature automatically results from the composition of the polyester resin film. Thus, the glass transition temperature of the polyester film is usually kept below about 70°C, because the amount of polybutylene terephthalate is preferably restricted to the range of about 20 to 60 weight %, from the standpoint of the resistance to milky change caused by retort treatment. A polyester resin film having a glass transition temperature above about 70°C can be produced by decreasing the amount of polybutylene terephthalate blended with the polyethylene terephthalate, but the film produced has poor resistance to milky change caused by retort treatment.

The mechanical properties of the polyester resin film are also an important factor from the standpoint of formability. Specifically, the elongation at break of the polyester resin film, measured at the speed of 100 mm/minute at 25°C in an ordinary tensile testing machine, should be at least above 80%. When a polyester resin film having below about 80% of elongation at break is formed into a can end, many cracks are produced in the laminated film because of its poor formability.

The preferred thickness of the polyester resin film (A) in a mono-layer film is about 5 to 50 $\mu$m, and more preferably about 10 to 30 $\mu$m. When the thickness of the mono-layer polyester resin film is below about 5$\mu$m, excellent corrosion resistance after forming may not be obtained and continuous lamination of such a thin film to the metal sheet may be difficult. Using a polyester resin film having a thickness above about 50 $\mu$m is economically undesirable. When the polyester resin film (A) consists of a lower layer (Al) and an upper layer (A2), the preferred thickness ranges are as follows:-the thickness of lower layer (Al): 1 to 10 $\mu$m, more preferably 2 to 5 $\mu$m; upper layer (A2): 2 to 40 $\mu$m, more preferably 5 to 30 $\mu$m; and the total thickness of the composite film (A): 5 to 50 $\mu$m, more preferably 10 to 40 $\mu$m.

It is also contemplated in the present invention that additives such as antioxidizers, stabilizers, antistatic agents, antiblocking agents, lubricants and corrosion inhibitors and other known additives and adjuvants in amounts known and desired for various performance characteristics can be added in the manufacturing process of the polyester resin film. Also, if desired, the upper polyester resin layer (A2) may be pigmented using conventional pigments such as titanium dioxide.

## CHARACTERISTICS OF THE POLYESTER RESIN FILM AFTER LAMINATING TO THE METAL SHEET

In addition to the characteristics of the original polyester resin film, the characteristics after lamination to the metal sheet are also important in view of the resistance to the milky change caused by the retort treatment, the adhesion to the metal sheet after forming, and the corrosion resistance after forming and packing foods or beverages into the can. They should be controlled within the certain optimum and preferred range according to the following factors. These factors include:

(1) relative density ratio in the laminated polyester resin film; and

(2) residual degree of biaxial orientation in the laminated polyester resin film.

The relative density ratio in the laminated polyester resin film can be determined as follows:

Samples A, B and C should be prepared according to the following methods, respectively:

Sample A: A metal sheet laminated with a polyester resin film on the one side and with a polyolefin-containing resin film on the other side is immersed in dilute hydrochloric acid solution at 25°C. After dissolution of the metal sheet, the obtained polyester resin film is rinsed with water for 3 hours and then dried in a desiccator in the presence of silica gel (drying agent) for 1 day at 30°C.

Sample B: A metal sheet laminated with the same polyester resin film as in Sample A is heated in a nitrogen atmosphere at a temperature of 30°C above the melting temperature of said film for 1 minute and then immediately immersed in liquid nitrogen. The laminated film alone is then obtained by using the same method as for Sample A.

Sample C: A metal sheet laminated with the same polyester resin film as in Sample A is heated for 1 hour in a nitrogen atmosphere at a temperature where a maximum density is obtained within the crystallization temperature range of the laminated polyester resin film. The laminated film is then obtained by using the same method as for Sample A.

In samples prepared by the methods described above, Sample B corresponds to the state where the film has an almost amorphous non-oriented structure, and Sample C corresponds to the state with the maximum crystallization structure.

The relative density ratio in the laminated polyester resin film (D) is calculated by the following equation by using the density of Samples A, B and C measured by a known method which uses a gradient density tube:

$$D\ (\%)\ =\ [(Da\ -Db)/(Dc\ -Db)]\ \times 100$$

where, Da, Db and Dc respectively represent the densities of Samples A, B and C.

D calculated according to the above equation represents the degree of the crystallization of the polyester resin layer contacting the metal sheet.

In the present invention, D in the polyester resin film laminated on the metal sheet is preferably controlled within the range of about 30% to about to 85%. When D is less than about 30%, it may be remarkably difficult to prevent the milky change caused by retort treatment, because it seems that a greater portion of the laminated biaxially oriented polyester resin film may change to the amorphous non-oriented state and may not be recrystallized before quenching the laminate in the production process. D should therefore be above about 30% after the lamination to the metal sheet.

On the other hand, it is also preferable in the present invention that D is not greater than about 85%, because when D greater than about 85%, many cracks form in the laminated polyester resin film due to the reduced formability of the film, particularly in impact forming.

Furthermore, the residual degree of biaxial orientation (BO) is also an important factor in the present invention. This BO is determined by the following procedures.

(1) the X-ray diffraction intensity of the polyester resin film before and after lamination to the metal sheet is measured within the range of 20° to 30°;

(2) the points at $2\theta = 20°$ and $2\theta = 30°$ are connected by a straight line, and this line is designated as the base line;

(3) the height of the peak appearing in $2\theta = 23°$ to 29° of the diffraction intensity curve from the base line is measured; and the peak height of the refraction intensity curve of the polyester resin film before and after lamination to the metal sheet is represented by Ia and Ib, respectively; and

(4) the residual degree of biaxial orientation (BO) is represented in the following equation:

$$BO\ (\%)\ =\ Ib/Ia\ \times\ 100$$

In the present invention, when BO is less than about 10 %, the formability of the laminated polyester resin film may be poor. When BO is greater than about 85 %, the adhesion of the laminated polyester resin film to the metal sheet may be poor. Therefore, BO is preferably controlled within the range of about 10 to 85%, and more preferably about 30 to 70% for severe forming conditions.

THE POLYOLEFIN-CONTAINING RESIN FILM

As regards the polyolefin-containing resin film (B), as the polyolefin resin is crystalline and has no polar radicals, the adhesion to a metal sheet after lamination is not very strong and the film can easily peel off during forming. One method to remedy such a drawback is to use a polyolefin resin film of which one side is oxidized by a flame treatment or a corona treatment to form carbonyl groups on its surface, so that the improved adhesion to the metal sheet can be obtained. In the present invention, the polyolefin-containing resin film (B) may be a low density polyethylene resin (LDPE) film or high density polyethylene resin (HDPE) film of which one side is oxidized by a flame treatment or a corona treatment to the extent that the wetting index is from 35 to 65 dynes. When the film has a wetting index less than 35 dynes, satisfactory adhesion in the forming process can not be obtained, whilst a film having a wetting index above 65 dynes cannot improve the adhesion. A polyolefin resin film having a wetting index from 40 to 55 dynes is preferably used. Oxidation either by flame treatment or by corona treatment can be used, but the latter can more uniformly oxidize the film surface. The wetting index can be determined by measuring the contact angle of the oxidized film and a water drop put on the film using the following equation:

$$W\ =\ \gamma_L\ (1\ +\ \cos\theta)$$

where
    W:     contact force corresponding to the wetting index;
    $\gamma_L$:     surface tension of water; and
    $\theta$:     contact angle.

Further, the use of a film of HDPE resin having a melting temperature above 120°C is more preferable where can stocks produced from the laminate are treated for the sterilization in hot steam and hot water.

The adhesion of the polyolefin resin film to the metal sheet can also be improved by using a polyolefin-containing resin film composed of an adhesive acid-modified polyolefin resin containing carboxyl, ester or anhydride groups. The film (B) may thus be a film of an adhesive polyolefin resin modified with an ethylenically unsaturated carboxylic acid (such as acrylic acid, methacrylic acid, crotonic acid, fumaric acid, maleic acid or itaconic acid), with a partial ester of an ethylenically unsaturated acid (such as monomethyl maleate, monoethyl maleate, monomethyl fumarate, monoethyl fumarate, tripropylene glycol monomethyl ether acid maleate, ethylene glycol monophenol ether acid maleate), or with an ethylenically unsaturated carboxylic acid anhydride such as maleic anhydride. The acid modification of the adhesive polyolefin resins can be effected, for example, by grafting maleic anhydride (whose content is from about 0.1 to about 10 weight % preferably from about 0.3 to about 5 weight %), to a polyolefin resin such as polypropylene, high density polyethylene (HDPE), low density polyethylene (LDPE), ethylene-propylene copolymer or ethylene-vinyl acetate copolymer. When the grafting content is less than the lower limit, satisfactory adhesion to a metal sheet cannot be obtained, and when it is above the upper limit, the adhesion to a metal sheet can not effectively be improved and rather deteriorates due to the increase of the ungrafted content of carboxylic acids or anhydrides. The adhesive resin can also be prepared by including unmodified polyolefin resin in the graft modified polyolefin resin. The unmodified polyolefin resin may be the same or different resin as modified by grafting.

In the practice of the present invention, the polyolefin resin film (B) can also be composed of a multilayered film in which the lower layer (B1) (in direct contact with the metal sheet) is composed of the same adhesive resin composition as a mono-layer polyolefin-containing resin film (B) and in which the upper layer (B2) is a polyolefin or a polyamide film adhered to the lower layer. When the upper layer (B2) is polyethylene, the adhesive resin base of the lower layer (B1) may be polyethylene or ethylene-propylene copolymer. When the upper layer (B2) is polypropylene homopolymer or ethylene-propylene copolymer, the adhesive resin base of the lower layer (B1) may be polypropylene or an ethylene-propylene random copolymer. When the upper layer (B2) is polyamide, the adhesive resin base of the lower layer (B1) may be polyethylene or polypropylene. Also, when can stocks produced from these laminates are sterilized in hot steam and hot water, the adhesive resin base of the lower layer (B1) should be HDPE, polypropylene or ethylene-propylene copolymer and the resin of the upper layer (B2) should be HDPE, polypropylene, ethylene-propylene copolymer or a polyamide such as nylon-6, nylon-6/6, nylon-6/9, nylon-6/10 or nylon-6/12. Also, a blend of these resins having a melting temperature above 120°C with resins having lower melting temperature (such as LDPE, ethylene-acrylate copolymer, ethylene-vinyl acetate copolymer, random ethylene-acrylic acid copolymer, random ethylene-methacrylic acid copolymer or ionomer) can also be used, so long as the effective melting temperature of the resulting blended resin remains at about 120°C or more.

The thickness of the adhesive resin film (the lower layer (B1)) in the composite film (B) is preferably from 0.5 to 15 $\mu$m, and the total thickness of the composite film (B) should be determined in accordance with the use of the laminate.

Preferably, the composite film (B) is produced by co-extrusion.

Additionally, in the practice of the present invention another layer of a polyamide or a polyolefin resin film (B4) may be adhered to the upper layer (B2) with another adhesive resin layer (B3) sandwiched between the layer (B4) and the layer (B2). In this case, the adhesive resin layer (B3) is the same as the adhesive resin layer (B1). If desired, (B4), or (B2) and (B4) may be pigmented with for example titanium dioxide in conventional manner.

## THE METAL SUBSTRATE

The metal sheet used in the invention can be steel sheet, tin plated steel sheet, nickel plated steel sheet, zinc plated steel sheet or aluminium alloy sheet. Further, in order to provide the desired excellent adhesion properties of the metal sheet to the polyester resin film as well as to the polyolefin-containing resin film after forming to can stocks such as can ends, drawn cans, drawn and redrawn cans and drawn and stretch formed cans, the metal sheet is covered with a mono layer of hydrated chromium oxide or a double layer composed of a lower layer of metallic chromium and an upper layer of hydrated chromium oxide.

The amount of plated tin, nickel and zinc in the metal sheet is preferably below about 5.6 g/m$^2$, about 3.0 g/m$^2$ and about 3.0 g/m$^2$, respectively, for reasons of economy. However, with amounts of tin, nickel and zinc less than 0.05 g/m$^2$, the effect of plated tin, nickel or zinc on such characteristics as corrosion resistance to the packed foods or beverages is hardly positive, despite the additional treatment in the further plating process.

The preferred amount of hydrated chromium oxide as chromium is about 2 to about 30 mg/m$^2$ in the single layer or the double layer, particularly with an aluminium alloy sheet or tin plated steel sheet. The amount of metallic chromium is preferably about 10 to about 200 mg/m$^2$, particularly with a steel sheet. When the amount of hydrated chromium oxide as chromium is below about 2 mg/m$^2$ or above about 30 mg/m$^2$, the adhesion of the laminated polyester resin film or polyolefin-containing resin film to the metal sheet may be poor after forming and exposure to hot steam and hot water in a retort, even if the amount of metallic chromium is in the preferred range of about 10 to 200 mg/m$^2$. The deposition of metallic chromium can effectively improve characteristics such as the adhesion of the laminated polyester resin film and polyolefin-containing resin film to the metal sheet or the corrosion resistance of the obtained laminate, but the deposition of metallic chromium above about 200 mg/m$^2$ can not substantially improve the corrosion resistance.

## PRODUCTION OF THE LAMINATE

In accordance with the method of the present invention, the biaxially oriented polyester resin film and the polyolefin-containing resin film having the above-mentioned characteristics are continuously heat bonded to the surfaces of the metal sheet at the same time under conditions wherein the temperature of the metal sheet, the thicknesses of the metal sheet, the polyester resin film and the polyolefin-containing resin film, the surface temperature of the pair of laminating rolls (nip rolls), the pressure applied to the laminating rolls and the cooling time after lamination should all be controlled within preferred ranges depending on the characteristics of the polyester resin film and the polyolefin-containing resin film. In particular, it is essential that at the time of lamination, the metal sheet is maintained within the temperature range from the melting temperature of the polyester resin film ($T_{m1}$) up to $T_{m1}$ + 30°C, and the surface temperature of each laminating roll contacting the films should be controlled at a temperature below the $T_{m1}$ or the melting temperature of polyolefin-containing resin ($T_{m2}$), respectively. When the temperature of the metal sheet is below $T_{m1}$, the laminated polyester resin film may not be sufficiently adhered to the metal sheet and can be peeled off during forming, and when the temperature of the metal sheet is above $T_{m1}$ + 30°C, the greater part of the laminated polyolefin resin film melts and adheres to the laminating roll, even if the surface of the roll is cooled below $T_{m2}$. Furthermore, when the surface temperature of the laminating rolls are above $T_{m1}$ or $T_{m2}$, respectively, the free sides of the laminated films melt by heat conducted from the laminating rolls (which are also heated by the heat conducted from the metal sheet) and then adhere to the laminating rolls. Continuous and stable production of the laminate cannot then be achieved. It is preferable to provide the cooling capacity by using several assistant cooling rolls which contact the surface of the laminating roll.

The method for heating the metal sheet should be chosen from the standpoint of continuous and stable production of the laminate at high speed. Conduction heating with inductively heated rolls, induction heating or resistance heating practiced in the flow-melting of tinplate can be used, because the metal sheet can rapidly be heated and its temperature can easily be controlled. Furthermore, auxiliary preheating of the metal sheet with rolls heated by hot steam or in an electric oven is preferable.

After lamination, the laminate should be quenched to a temperature below the glass transition temperature of the polyester resin within 10 seconds, lest the amorphous non-oriented polyester resin layer should recrystallize and large spherulites of polyester resin, which reduce the adhesivity of resin film to the metal sheet, should grow between lamination and quenching.

The invention is explained in further detail in the follwing examples, which are for illustrative purposes only.

Laminate 1 for Example 1

A biaxially oriented polyester resin film (composed of 61 weight % of polyethylene terephthalate and 39 weight % of polybutylene terephthalate having a thickness of 15 μm, a minimum crystallization time of 20 seconds, a glass transition temperature of 58°C and an elongation at break of 119 %) was laminated to one side of TFS strip by using a pair of laminating rolls. The surface temperature of the roll contacting the polyester film was 126°C. A HDPE resin film (of which one side was oxidized by a corona treatment to give a wetting index of 52 dynes and having a thickness of 15 μm) was laminated to the other side of the TFS strip at the same time, using a pair of laminating rolls where the surface temperature of the roll contacting the HDPE resin film was 87°C. The TFS strip, which had a thickness of 0.22 mm and a width of 250 mm, and a coating of metallic chromium of 115 mg/m$^2$ and hydrated chromium oxide of 18 mg/m$^2$, had been heated to 275°C by using 3 heating rolls heated by induction heating at a laminating speed of 25 m/minute. After 3 seconds, the laminate was quenched in water having a temperature 28°C.

Laminate 2 for Example 2 and Example 6

A biaxially oriented polyester resin film (composed of 50 weight % of polyethylene terephthalate and 50 weight % of polybutylene terephthalate having a thickness of 15 μm, a minimum crystallization time of 7.5 seconds, a glass transition temperature of 49°C and an elongation at break of 124 %) was laminated to one side of the same TFS strip as for Laminate 1, and a maleic anhydride graft-modified HDPE resin film having graft level of about 0.5 weight % and a thickness of 15 μm was laminated on the other side of the same TFS strip under the same conditions as for Laminate 1, except in that the TFS was heated to 272°C, the surface temperature of the roll contacting the polyester resin film was 123°C, and that of the roll contacting the HDPE film was 79°C. After 3 seconds, the laminate was quenched in water having a temperature of 28°C.

Laminate 3 for Example 3

A biaxially oriented double layered composite resin film (of which the upper layer was a copolyester resin film composed of 88 mole % of ethylene terephthalate and 12 mole % of ethylene isophthalate having a thickness of 10 μm, a minimum crystallization time of 318 seconds and a glass transition temperature of 72°C, and the lower layer was a composite polyester resin film composed of 59 weight % of polybutylene terephthalate and 41 weight % of a copolyester resin composed of 94 mole % of ethylene terephthalate and 6 mole % of ethylene isophthalate having a thickness of 5 μm, a minimum crystallization time of 22 seconds and a glass transition temperature of 41°C, and having an elongation at break of 128 % for the double layered film) was laminated on one side of the same TFS strip as for Laminate 1. A double layered polyolefin film (of which the upper layer was a polypropylene homopolymer having thickness of 10 μm and the lower layer was a maleic anhydride graft modified ethylene-propylene random copolymer having graft levels of about 0.39 weight % and a thickness of 3 μm) was laminated on the other side of the TFS strip under the same conditions as for Laminate 1, except in that the TFS was heated to 252°C, the surface temperature of the roll contacting the polyester film was 117°C, and that of the roll contacting the polyolefin film was 68°C. After 1 second, the laminate was quenched in water having a temperature of 28°C.

Laminate 4 for Example 4 and Example 7

A biaxially oriented double layered composite resin film (of which the upper layer was a polyethylene terephthalate homopolymer film having a thickness of 10 μm, a minimum crystallization time of 42 seconds and a glass transition temperature of 74°C and the lower layer was a composite polyester resin film composed of 42 weight % of polyethylene terephthalate and 58 weight % of polybutylene terephthalate copolyester resin having a thickness of 5 μm, a minimum crystallization time of 2.8 seconds and a glass transition temperature of 42°C, and having an elongation at break of 120 % for the double layered film) was laminated on one side of the same TFS strip as for Laminate 1. A double layered polyolefin film (of which the upper layer was a HDPE resin film having a thickness of 12 μm and the lower layer was a maleic anhydride graft-modified HDPE resin film having graft level of about 0.5 weight % and a thickness of 5 μm) was laminated on the other side of the strip under the same conditions as for Laminate 1, except in that the TFS was heated to 268°C, the surface temperature of the roll contacting the polyester resin film was 121°C, and that of the roll contacting the polyolefin film was 76 °C. After 2 seconds, the laminate was quenched in water having a temperature of 28°C.

Laminate 5 for Example 5

A biaxially oriented composite resin film (composed of 42 weight % of polyethylene terephthalate and 58 weight % of polybutylene terephthalate copolyester resin having a thickness of 15 μm, a minimum crystallization time of 2.8 seconds, a glass transition temperature of 42°C and an elongation at break of 125 %) was laminated on the one side of the same TFS strip as for Laminate 1. A double layered polyolefin-containing resin film (of which the upper layer was a Nylon-6 resin film having a thickness of 15 μm and the lower layer was a maleic anhydride graft-modified ethylene-propylene random copolymer having graft levels of about 0.39 weight % and a thickness of 3 μm) was laminated on the other side of the strip under the same condition as for Laminate 1, except in that the TFS was heated to 261°C, the surface temperature of the roll contacting the polyester resin film was 120°C, and that of the roll contacting the polyolefin-containing film was 74°C. After 4 seconds, the laminate was quenched in water having a temperature of 28°C.

Laminate 6 for Example 8

A cold rolled steel strip having a thickness of 0.22 mm was electrolytically degreased and then pickled under known conditions. After rinsing with water, the steel strip was electroplated with 1.5 g/m$^2$ of tin with a tinplating electrolyte composed of 80 g/l of stannous sulfate, 60 g/l of phenolsulfonic acid (65 % solution) and 0.06 g/l of ethoxylated $\alpha$-naphthol in water under 20 A/dm$^2$ of cathodic current density at an electrolyte temperature of 45 °C. After rinsing with water, a TFS film having an upper layer of hydrated chromium oxide containing 16 mg/m$^2$ of chromium and a lower layer of metallic chromium of 81 mg/m$^2$ was formed by cathodic treatment on both sides of the tin plated steel strip by using an electrolyte composed of 50 g/l of chromic acid and 0.5 g/l of sulfuric acid in water under 40 A/dm$^2$ of cathodic current density at an electrolyte temperature of 50 °C. The thus treated tin plated steel strip was rinsed with hot water and dried.

Then, the same composite polyester resin film as Laminate 3 was laminated on the one side of the tin plated steel strip, and a composite polyolefin resin film (having an uppermost layer of a polypropylene homopolymer film pigmented with 7 weight % of titanium dioxide having a thickness of 10 $\mu$m; a second upper layer, adhered under the uppermost layer, of a maleic anhydride graft-modified ethylene-propylene random copolymer film having graft levels of about 0.39 weight % and a thickness of 3 $\mu$m; a second lower layer, adhered under the second upper layer, of a polypropylene homopolymer film having a thickness of 10 $\mu$m; and a lowermost layer, adhered under the second lower layer, which was the same maleic anhydride graft-modified ethylene-propylene random copolymer film as that of the second upper layer) was laminated on the other side of the strip under the same conditions as for Laminate 1, except in that the tin plated steel strip was heated to 251 °C, the surface temperature of the roll contacting the polyester resin film was 117 °C, and that of the roll contacting the polyolefin-containing resin film was 68 °C. After 1 second, the laminate was quenched in water having a temperature of 28 °C.

Laminate 7 for Comparative Example 1

A biaxially oriented polyethylene terephthalate homopolymer film (having a thickness of 15 $\mu$m, a minimum crystallization time of 42 seconds, a glass transition temperature of 74 °C and an elongation at break of 118 %) was laminated on one side of the same TFS strip as for Laminate 1, and a double layered polyolefin resin film (of which the upper layer was a HDPE resin film having a thickness of 12 $\mu$m and the lower layer was a maleic anhydride graft-modified HDPE resin film having graft levels of about 0.5 weight % and a thickness of 3 $\mu$m) was laminated on the other side of the strip under the same conditions as for Laminate 1, except in that the TFS was heated to 277 °C, the surface temperature of the roll contacting the polyester resin film was 128 °C, and that of the roll contacting the polyolefin-containing film was 89 °C. After 2 seconds, the laminate was quenched in water having a temperature of 28 °C.

Laminate 8 for Comparative Example 2

A biaxially oriented copolyester resin film (composed of 88 mole % of ethylene terephthalate and 12 mole % of ethylene isophthalate having a thickness of 15 $\mu$m, a minimum crystallization time of 318 seconds, a glass transition temperature of 72 °C and an elongation at break of 129 %) was laminated on one side of the same TFS strip as for Laminate 1, and a double layered polyolefin-containing resin film (of which the upper layer-was a Nylon-6 resin film having a thickness of 15 rim and the lower layer was a maleic anhydride graft-modified ethylene-propylene random copolymer having graft levels of about 0.39 weight % and a thickness of 3 $\mu$m) was laminated on the other side of the strip under the same condition as for Laminate 1, except in that the TFS was heated to 235 °C, the surface temperature of the roll contacting the polyester resin film was 112 °C, and that of the roll contacting the polyolefin-containing film was 63 °C. After 1 second, the laminate was quenched in water having a temperature of 28 °C.

Laminate 9 for Comparative Example 3

A biaxially oriented composite resin film (composed of 42 weight % of polyethylene terephthalate and 58 weight % of polybutylene terephthalate copolyester resin having a thickness of 15 $\mu$m, a minimum crystallization time of 2.8 seconds, a glass transition temperature of 42 °C and an elongation at break of 125 %) was laminated on one side of the same TFS strip as for Laminate 1, and a maleic anhydride graft-modified HDPE resin film (having graft level of about 0.5 weight % and a thickness of 15 $\mu$m) was laminated on the other side of the strip under the same conditions as for Laminate 1, except in that the TFS was heated to 260 °C, the surface temperature of the roll contacting the polyester resin film was 120 °C, and that of the roll contacting the polyolefin film was 73°C. After 4 seconds, the laminate was quenched in water having a temperature of 28°C.

The characteristics of the samples obtained for Examples 1 to 8 and Comparative Examples 1 to 3 were evaluated by the following test methods, after D and BO of the polyester resin layer just before the retort treatment were determined by using the methods described above.

The results are shown in Table 1 and Table 2 below.

## (1) ADHESION OF THE LAMINATED POLYESTER RESIN AND POLYOLEFIN-CONTAINING RESIN FILM AFTER FORMING

The resultant laminate was cut into a circular blanks having a diameter of 187 mm with a punch press. The blanks were formed into drawn and stretch formed cans under the following conditions

## FORMING CONDITIONS

A. Drawing process
    Drawing ratio : 1.50
B. Redrawing process
    First redrawing ratio : 1.29
    Second redrawing ratio : 1.24
    Third redrawing ratio : 1.20,
    Curvature radius in the corner of dies used for redrawing process : 0.4 mm
    Load for preventing wrinkle : 6000 kg
C. Average ratio of a thickness of metal sheet in can bodies to can ends : -20 %

The adhesion of the laminated polyester resin film and polyolefin containing resin film to the metal sheet was visually evaluated as to the degree of the peeling-off of the resin film layer in a cup obtained in each redrawing process.

## (2) RESISTANCE TO MILKY CHANGE IN A RETORT TREATMENT

The resulting laminate was cut into a piece 50 mm by 100 mm. The cut samples were placed on stainless steel (having a thickness of 10 mm and a temperature of about 20 to 30°C) so that the side of the sample laminate being used as the outside of can stock was exposed to hot steam, and then were treated by hot steam at 120°C for 30 minutes in a retort. The surface appearance of the laminated film, directly exposed to hot steam, was then visually evaluated.

## (3) FORMABILITY

The formability of the laminated polyester resin film or polyolefin-containing resin film was evaluated by amount of current which passed at a constant voltage of 6.3 volt between an anode (provided by metal exposed through cracks in the laminated resin layer on the inside of a drawn and stretch formed can produced by the forming procedure described above, in which 3% of aqueous sodium chloride solution was filled) and a cathode of stainless steel rod inserted in the can.

## (4) RESISTANCE TO THE FLAVOR CHANGE OF CONTENTS PACKED IN THE CAN AFTER STORAGE

An orange-flavored carbonated beverage (Fanta Orange by Japan Coca Cola company Ltd.) was packed in the stretch formed cans made of laminates mentioned above, and can ends made of the same laminate as that of stretch formed can were seamed. The cans were then stored for 3 weeks at a temperature of 37°C. After a storage period of 3 weeks, the flavor of content was evaluated and classified by a hundred appraisers as follows

excellent : more than 90 appraisers found no difference between the original flavor and that after storage in the can

good : 60 to 90 appraisers found no difference between the original flavor and that after storage in the can; and

poor : less than 60 appraisers found no difference between the original flavor and that after storage in the can.

Table 1

| | Resin No. | Resin composition | Characteristics | | | Thickness (μm) | |
|---|---|---|---|---|---|---|---|
| | | | *M.T.H.C. (sec) | *Tg(°C) | *Tm(°C) | as mono-layer | as *L or U layer |
| Polyester resin layer | A1 | *PET//PBT (50//50) | 7.5 | 49 | 251 | 15 | 5 |
| | A2 | PET//PBT (42//58) | 2.8 | 42 | 241 | 15 | 5 |
| | A3 | PET//PBT (61//39) | 20 | 58 | 253 | 15 | |
| | A4 | *PET | 42 | 74 | 256 | 15 | 10 |
| | A5 | *PET·I-12 | 318 | 72 | 228 | 15 | 10 |
| | A6 | *PET·I-6//PBT (41//59) | 22 | 41 | 235 | | 5 |
| Polyolefin-containing resin layer | B1 | corona treated *HDPE | | | 133 | 15 | |
| | B2 | *modified HDPE | | | 129 | 15 | 5 |
| | B3 | *modified E-P copolymer | | | 148 | | 3 |
| | B4 | HDPE homopolymer | | | 133 | | 12 |
| | B5 | *PP homopolymer⁼ | | | 169 | | 10 |
| | B6 | Nylon-6 | | | 225 | | 15 |

Remarks  * M.T.H.C : minimum time for half crystallization ;
Tg : glass transition temperature ;
Tm : melting temperature ;
L or U layer : lower or upper layer ;
PET//PBT : blended resin of polyethylene terephthalate and polybutylene terephthalate ;
PET : polyethylene terephthalate homopolymer ;
PET·I-12 : copolymer of ethylene terephthalate and ethylene isophthalate (12 represent mole % of ethylene isophthalate) ;
PET·I-6//PBT : blended resin of copolymer of ethylene terephthalate and etylene isophthalate, and polybutylene terephthalate
(6 represents mole % of ethylene isophthalate) ;
HDPE : high density polyethylene homopolymer ;
modified HDPE : maleic anhydride modified high density polyethylene ;
modified E-P copolymer : maleic anhydride modified ethylene-propylene copolymer ;
PP : polypropylene ;
⁼ pigmented with 7 % of titanium dioxide in case of the uppermost layer

Table 2

| | | Ex 1 | Ex 2 | Ex 3 | Ex 4 | Ex 5 | Ex 6 | Ex 7 | Ex 8 | Comp Ex 1 | Comp Ex 2 | Comp Ex 3 |
|---|---|---|---|---|---|---|---|---|---|---|---|---|
| Laminate | Resin film inside of can | B1 | B2 | B5/B3 | B4/B2 | B6/B3 | A1 | A4/A2 | A5/A6 | B4/B2 | B6/B3 | A3 |
| | Resin film outside of can | A3 | A1 | A5/A6 | A4/A2 | A2 | B2 | B4/B2 | •B5/B3/B5/B3 | A4 | A5 | B2 |
| | metal sheet | TFS | TFS | TFS | TFS | TFS | TFS | TFS | Tin plate | TFS | TFS | TFS |
| Temp. of metal sheet(°C) | | 275 | 272 | 252 | 268 | 261 | 272 | 268 | 251 | 277 | 235 | 260 |
| Laminating condition | Temp. of laminating roll (°C) •PES side | 126 | 123 | 117 | 121 | 120 | 123 | 121 | 117 | 128 | 112 | 120 |
| | •POL side | 87 | 79 | 68 | 76 | 74 | 79 | 76 | 68 | 89 | 63 | 73 |
| | Time until quenching(sec) | 3 | 3 | 1 | 2 | 4 | 3 | 2 | 1 | 2 | 1 | 4 |
| Characteristics of polyester resin film just after lamination | D (%) | 53 | 58 | 34 | 46 | 62 | 58 | 46 | 33 | 29 | 21 | 63 |
| | BO (%) | 61 | 59 | 69 | 67 | 64 | 59 | 67 | 70 | 74 | 80 | 62 |
| Properties | Adhesion | good | excellent | excellent | excellent | excellent | excellent | excellent | excellent | excellent | excellent | excellent |
| | Milky resistance | excellent | excellent | good | excellent | excellent | excellent | excellent | •excellent | poor | poor | excellent |
| | Formability (mA) | 0.02 | 0.01 | 0.01 | 0.01* | 0 | 0.01 | 0 | 0 | 0.01 | 0 | 0.02 |
| | Flabor resistance | excellent | good | excellent | excellent | excellent | good | excellent | excellent | excellent | excellent | poor |

Remarks • B6 : the upper most layer pigmented with 7 % of titanium dioxide ;
PES side : polyester resin film side ;
POL side : polyolefin-containing resin film side
excellent : bright white

## Claims

1. A metal sheet suitable for use in the manufacture of cans, can parts or screw caps, having on both sides a single layer of hydrated chromium oxide or a double layer comprising a lower layer of metallic chromium and an upper layer of hydrated chromium oxide and having a different resin film laminated on each side, one side of the sheet being laminated with a polyester resin film (A) which has a minimum half crystallisation time of less than 100 seconds and a glass transition temperature of 40 to 70°C, and the other side being laminated with an adhesive polyolefin film (B) of which the side laminated to the metal sheet is oxidised, or a polyolefin-containing resin film (B) composed of modified polyolefin resin which contains carboxylic acid, ester or anhydride groups.

2. A metal sheet of claim 1 wherein the polyester resin film has a residual degree of biaxial orientation of 10 to 85% after hot lamination.

3. A metal sheet of claim 1 or claim 2, wherein said polyester resin is a blended polyester resin composed of 40 to 80 weight % of polyethylene terephthalate and 20 to 60 weight % of polybutylene terephthalate.

4. A metal sheet of claim 1, wherein said polyester resin film is a composite film of two polyester resin film layers.

5. A metal sheet of claim 4 wherein the upper polyester layer has a residual degree of biaxial orientation of 30 to 85%.

6. A metal sheet of claim 4 or claim 5, wherein the polyester resin of the upper layer is polyethylene terephthalate or a copolymer of ethylene terephthalate and ethylene isophthalate.

7. A metal sheet of any of claims 4 to 6, wherein the polyester resin of the lower layer is a blended resin composed of 40 to 80 weight % of polyethylene terephthalate and 20 to 60 weight % of polybutylene terephthalate.

8. A metal sheet of any of claims 4 to 6, wherein the polyester resin of the lower layer is a blended resin composed of 40 to 80 weight % of a copolymer of ethylene terephthalate and ethylene isophthalate, and 20 to 60 weight % of polybutylene terephthalate.

9. A metal sheet of claim 6 or claim 8, wherein said copolymer of ethylene terephthalate and ethylene isophthalate is a copolymer of 80 to 98 mole % of ethylene terephthalate and 2 to 20 mole % of ethylene isophthalate.

10. A metal sheet of any preceding claim, wherein said adhesive polyolefin resin film is a low or high density polyethylene film of which the side to be laminated to said methal sheet is oxidised to the extent that the wetting index is 35 to 60 dynes.

11. A metal sheet of any of claims 1 to 9, wherein said polyolefin-containing resin is a polyolefin modified with an ethylenically unsaturated carboxylic acid, a partial ester of an ethylenically unsaturated carboxylic acid, or an ethylenically unsaturated carboxylic acid anhydride.

12. A metal sheet of any of claims 1 to 9, wherein said polyolefin-containing resin film is composed of an upper layer of polyolefin resin film or polyamide resin film, and a lower layer of modified adhesive polyolefin resin film.

13. A metal sheet of any of claims 1 to 9 and 12, wherein said modified adhesive polyolefin resin is polypropylene modified with maleic anhydride, low density polyethylene modified with maleic anhydride, high density polyethylene modified with maleic anhydride, ethylene-propylene copolymer modified with maleic anhydride or ethylene-vinyl acetate copolymer modified with maleic anhydride.

14. A metal sheet of claim 12 or claim 13, wherein said upper layer comprises a film of polypropylene homopolymer, high density polyethylene, ethylene-propylene copolymer or nylon-6.

15. A metal sheet of claims 1 to 9 and 11 to 14, wherein the polyolefin-containing resin film is composed of an uppermost layer of polyamide or polyolefin resin film, a second upper layer of adhesive polyolefin resin film, a second lower layer of polyamide or polyolefin resin film, and a lowermost layer of adhesive polyolefin resin film.

16. A metal sheet of any preceding claim, wherein said metal sheet is steel sheet, tin plated steel sheet, nickel plated steel sheet, zinc plated steel sheet or aluminium alloy sheet.

17. A metal sheet of claim 16 wherein said metal sheet is steel plated with 0.05 to 5.6 $g/m^2$ of tin, 0.03 to 30 $g/m^2$ of nickel, or 0.02 to 30 $g/m^2$ of zinc.

18. An aluminium alloy sheet or a tin plated steel sheet of claim 16 having 2 to 30 $mg/m^2$ of chromium oxide (as chromium) on both sides.

19. A steel sheet of any preceding claim, wherein said metal sheet has an upper layer of chromium oxide and a lower layer of 10 to 200 $mg/m^2$ of metallic chromium.

20. A method for producing a metal sheet of any preceding claim, wherein said polyester resin film and said polyolefin or polyolefin-containing resin film are laminated to the metal sheet while it is within a temperature range from the melting temperature ($Tm_1$) of the polyester resin film up to $Tm_1$ + 30°C by using a pair of laminating rolls, whose surface temperatures are controlled at below $Tm_1$ or the melting temperature ($Tm_2$) of said polyolefin-containing resin film, respectively, followed by quenching to a temperature below the glass transition temperature of said polyester resin within 10 seconds.

21. The use of a metal sheet of any of claims 1 to 19 in the production of cans or parts of cans or screw caps.

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | EP-A-0 312 308 (MB GROUP PLC)<br><br>* table 1, material 8,9 *<br>* page 3, line 11 - line 30; claims; figures 1-3 *<br>* page 3, line 58 - page 4, line 11 * | 1,4,6,9, 11-16, 19,21 | B32B15/08<br>B32B31/00 |
| D | & US-A-4 980 210 (...)<br>--- | | |
| A | EP-A-0 312 302 (MB GROUP PLC)<br><br>* page 3, line 22 - line 25; claims; examples *<br>* page 4, line 20 - line 31 *<br>--- | 1,4,6,9, 11-16, 19,21 | |
| A | GB-A-2 242 159 (TOYO KOHAN CO., LTD.)<br><br>* page 15, paragraph 1; claims 1-7,14; table *<br>--- | 1,6,9, 16-21 | |
| A | GB-A-2 233 917 (TOYO SEIKAN KAISHA LIMITED)<br>* page 7, line 25 - page 8, line 8; claims 1,2; figures 1A,1B *<br>* page 10, line 13 - line 24 *<br>--- | 1,3,21 | TECHNICAL FIELDS SEARCHED (Int.Cl.6)<br><br>B32B |
| A | DATABASE WPI<br>Week 9403,<br>Derwent Publications Ltd., London, GB;<br>AN 94-023001 (03)<br>& JP-A-5 331 302 (TEIJIN LIMITED) 14 December 1993<br>* abstract *<br>--- | 1,3 | |

-/--

The present search report has been drawn up for all claims

| Place of search | Date of completion of the search | Examiner |
|---|---|---|
| THE HAGUE | 30 June 1994 | Pamies Olle, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

| | European Patent Office | EUROPEAN SEARCH REPORT | Application Number EP 94 30 0500 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | DATABASE WPI<br>Week 9402,<br>Derwent Publications Ltd., London, GB;<br>AN 94-012434 (02)<br>& JP-A-5 320 378 (TEIJIN LIMITED) 3<br>December 1993<br>* abstract * | 1,3,8 | |
| A | DATABASE WPI<br>Week 7950,<br>Derwent Publications Ltd., London, GB;<br>AN 79-90304B (50)<br>& JP-A-54 141 886 (TORAY INDUSTRIES, INC.)<br>5 November 1979<br>* abstract * | 1,3,4,6,<br>7 | |
| A | DE-A-38 36 858 (TOYO KOHAN CO., LTD.)<br><br>* claims; examples * | 1,6,9,<br>16-21 | |
| | | | TECHNICAL FIELDS SEARCHED (Int.Cl.6) |

The present search report has been drawn up for all claims

| Place of search | Date of completion of the search | Examiner |
|---|---|---|
| THE HAGUE | 30 June 1994 | Pamies Olle, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)